(19) Europäisches Patentamt

European Patent Office

Office européen des brevets

(11) **EP 1 486 916 A1**

(12) **EUROPEAN PATENT APPLICATION**

(43) Date of publication:
**15.12.2004 Bulletin 2004/51**

(51) Int Cl.7: **G06T 5/00**, G06T 5/20, G06T 9/00

(21) Application number: **03425388.0**

(22) Date of filing: **13.06.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(71) Applicant: **STMicroelectronics S.r.l.**<br>**20041 Agrate Brianza (Milano) (IT)**<br><br>(72) Inventors:<br>• **Battiato, Sebastiano**<br>  **95022 Aicatena (Catania) (IT)** | • **Castorina, Alfio**<br>  **95020 Linera (Catania) (IT)**<br>• **Guarnera, Mirko**<br>  **93012 Gela (Caltanissetta) (IT)**<br>• **Vivirito, Paolo**<br>  **90047 Partinico (Palermo) (IT)**<br><br>(74) Representative: **Siniscalco, Fabio et al**<br>  **Jacobacci & Partners S.p.A.**<br>  **Via Senato, 8**<br>  **20121 Milano (IT)** |

(54) **Digital image processing method for adaptive sharpening**

(57)  A method (Q_Impr) for processing a first digital image, comprising an operation (A_Sharp) of increasing the sharpness of said digital image.

The method is characterized in that the operation of increasing the sharpness (A_Sharp) is of the adaptive type and includes an operation of associating (TD_Ev) with pixel ($p_i(x,y)$) of the starting image respective local homogeneity measures ($k(x,y)$), and an operation of providing pixel ($p_0(x,y)$) of a second digital image by modifying respective pixels ($p_i(x,y)$) of the first digital image on the basis of said respective local homogeneity measures ($k(x,y)$).

*Fig. 4*

**Description**

The present invention relates to the acquisition and processing of digital images and, more particularly, to a method for enhancing a digital image.

Digital images are nowadays used in many different applications, for example, in such acquisition devices of the new generation as digital photo-cameras or DSC (Digital Still Cameras). Furthermore, digital images are employed on an ever larger scale in the portable terminals for multimedia communication.

For this reason there is now felt the need for producing acquisition devices at a low cost that will also permit the acquisition of digital images of a high-quality or a quality that will prove satisfactory for a particular application.

The quality of an image is substantially bound up with the characteristics of the optical part of the acquisition device. In particular, is considerably influenced by the characteristics of the objective and the sensor.

A sensor, which in digital still cameras could typically be a CCD (Charge Coupled Device) or a CMOS (Complementary Metal Oxide Semiconductor), is an integrated circuit comprising a matrix of photosensitive cells (or elements) that identify respective pixels. In the phase of acquiring an image from a real scene each cell produces en electric signal proportional to the quantity of light that strikes it. More precisely, each cell responds to the radiance (quantity of emitted light) of a particular portion of the real scene: this portion constitutes the reception field of the pixel.

The greater the number of the photosensitive cells, i.e. the greater the spatial resolution of the sensor, the denser will be the information of the real scene captured in the acquisition process.

The choice of obtaining a better image quality by increasing the resolution of the sensor in terms of pixels is neither sufficient nor is it always practicable, and this essentially on account of either technological or economic reasons.

For this reason, when the quality of an image acquired by a sensor or an optical system with determined characteristics has to be improved, prior art often makes use of more or less sophisticated image processing methods that, exploiting the original information acquired by the sensor, set out to obtain an image having the best possible quality.

One of these methods is described, for example, in "Temporal Noise Reduction of Bayer Matrixed Video Data" (A.Bosco, M.Mancuso, S.Battiato, G.Spampinato, Proceedings of IEEE ICME'02, International Conference on Multimedia and Expo 2002, pp.681-684, Lausanne, Switzerland, August 2002). The method described in the aforesaid article aims at improving the quality of a digital image by means of a particular filtering of the image in order to reduce the effects of the noise introduced therein by the sensor.

Another example of these processing methods is described in "Improving Image Resolution by Adaptive Back-Projection Correction Techniques" (G.Messina, S.Battiato, M.Mancuso, A.Buemi, IEEE Transaction on Consumer Electronics 2002, vol.48, No.3, pp.400-408, August 2002). In this method a digital image is iteratively improved by means of an approach of the type known by the name of "back-projection".

Just like the prior art methods mentioned above, the present invention sets out to provide a processing method that will make it possible to enhance a digital image.

This aim is attained by means of a processing method as described in the first claim attached hereto. Preferred embodiments of the method of the invention are defined by dependent claims 2 - 19.

The following constitute further objects of the present invention: a portable communication device as described in Claim 20 hereinbelow and a server for the processing of digital images as described in Claim 21.

Further characteristics and the advantages of the invention will be understood more readily from the description about to be given of a preferred embodiment thereof, which is purely indicative and is not be considered limitative in any way, said description making reference to the attached drawings, of which:

- Figure 1 shows a schematic diagramme of a possible acquisition module of a portable communication device in which a processing method in accordance with the present invention could be used;
- Figure 2 schematically shows, as a sequence of phases, a first embodiment of an enhancement method according to the present invention;
- Figure 3 shows in greater detail one of the phases of the processing method schematically illustrated by Figure 2;
- Figure 4 shows in greater detail another of the phases of the processing method schematically illustrated by Figure 2;
- Figure 5 shows a possible strategy for assigning a homogeneity index to a pixel;
- Figure 6 shows in greater detail another of the phases of the processing method schematically illustrated by Figure 2;
- Figure 7 schematically shows as a sequence of phases a second embodiment of a processing method in accordance with the present invention;
- Figure 8 illustrates a possible application of the method of Figure 7.

A first embodiment example of the present invention relates to a portable communication device, a terminal device of cellular telephony for example, containing an acquisition and processing module 1 assigned the task of acquiring and processing digital images.

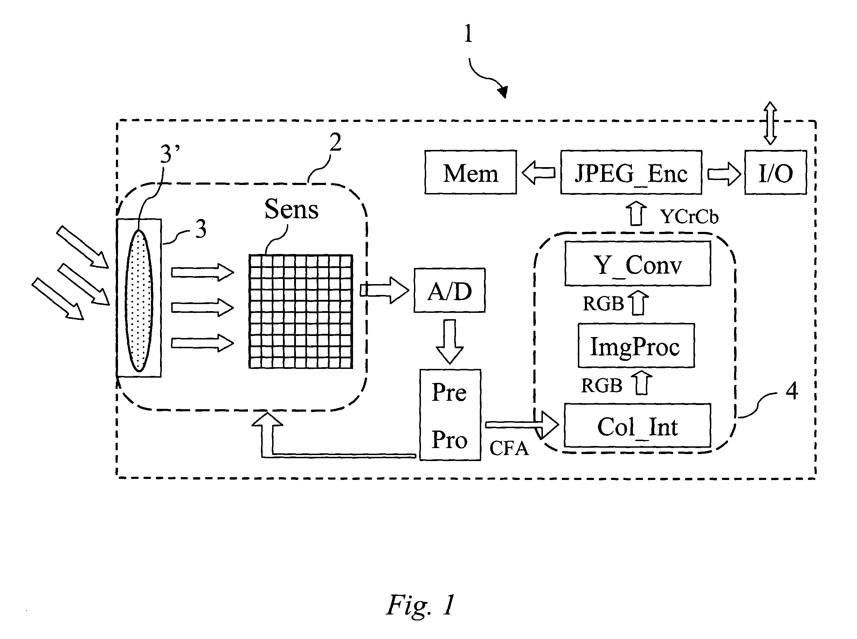

The functional scheme of the acquisition and processing module 1 is shown as a simplified block diagramme in Figure 1.

In this connection it should be noted that the teachings of the present invention can be extended also to applications different from those explicitly mentioned in the description given hereinbelow.

As shown in Figure 1, the digital image acquisition module 1 includes an opto-electronic acquisition unit 2 that comprises an objective 3 and an optical sensor Sens. The objective 3 comprises a lens 3' to focus the light radiations produced by a real scene onto the optical sensor Sens.

The optical sensor Sens, for example of the CCD (Charge Coupled Device) or the CMOS (Complementary Metal Oxide Semiconductor) type, is an integrated circuit comprising a matrix of photosensitive cells, each of which serves to generate an electric signal proportional to the quantity of light by which it is struck during the acquisition interval. In a preferred embodiment the sensor Sens comprises an optical mosaic filter to acquire images in CFA (Color Filter Array) format. Even more preferably, the optical sensor Sens comprises an optical mosaic filter of the Bayer type.

The acquisition module 1 also includes an analog/digital A/D conversion unit to translate the electric signals generated by each photosensitive cell into a digital value of a predetermined number of bits (generally 8, 10 or 12 bits).

When it leaves the A/D conversion unit 5, the digital image is in CFA format, since it is constituted by just a single chromatic component (R, G or B) per pixel. For this reason, only a single digital value, on 8 bits for example, is associated with each pixel.

An optional pre-processing unit PrePro, active both before and during the whole of the acquisition phase, is such as to interact with the opto-electronic acquisition unit 2 and to extract from the CFA image a number of parameters useful for carrying out such automatic control functions as, for example, self-focusing and automatic exposure functions. It should be noted that these functions are often not implemented in low-cost acquisition devices, many of which have, for example, a fixed focus.

A processing unit 4, typically known as IGP (Image Generation Pipeline), is assigned the task of carrying out a processing phase for providing, starting from an incomplete digital image in CFA format, a complete digital image, in YCrCb format for example, in which each pixel has associated with it three digital values (24 bits) that correspond to a luminance component Y and two chrominance components Cr and Cb. This transformation, obtained - for example - by means of interpolation, implies a passage from a representation of the image on a single plane (Bayer CFA plane) that contains the information relating to different chromatic components to a representation on three distinct planes.

In particular, the processing unit 4 may be realized by means of a dedicated processor (CFA processor), for example in VLSI (Very Large Scale Integration) technology.

In greater detail, the processing unit 4 in the example of Figure 1 includes a conversion block Col_Int that substantially makes it possible, starting from an image in CFA format, to obtain an image in RGB format.

Without introducing any limitation whatsoever, the processing unit 4 comprises a processing block ImgProc suitable for carrying out the operations connected with the processing method in accordance with the present invention. In a different embodiment, however, these operations could be performed in a block outside the IGP 4.

In the example of Figure 1, the processing block ImgProc makes it possible, starting from a digital input image in RGB format, to produce a digital output image that both perceptively and quantitatively will be of a better quality than the RGB input image.

The processing unit 4 also comprises a conversion block Y_Conv that performs a transformation or a conversion of the "improved" RGB image into an image in YCrCb format.

Preferably, the processing unit 4 is also such as to perform different functions, including for example: filtering of the noise introduced by the sensor Sens and/or application of special effects and other functions that will generally vary both in number and in type from one manufacturer to another.

The module 1 also includes a compression/encoding unit JPEG_Enc, generally of the JPEG type. The compressed image can be saved in a memory unit Mem or, alternatively, sent to an external peripheral device by means of an interface unit I/O.

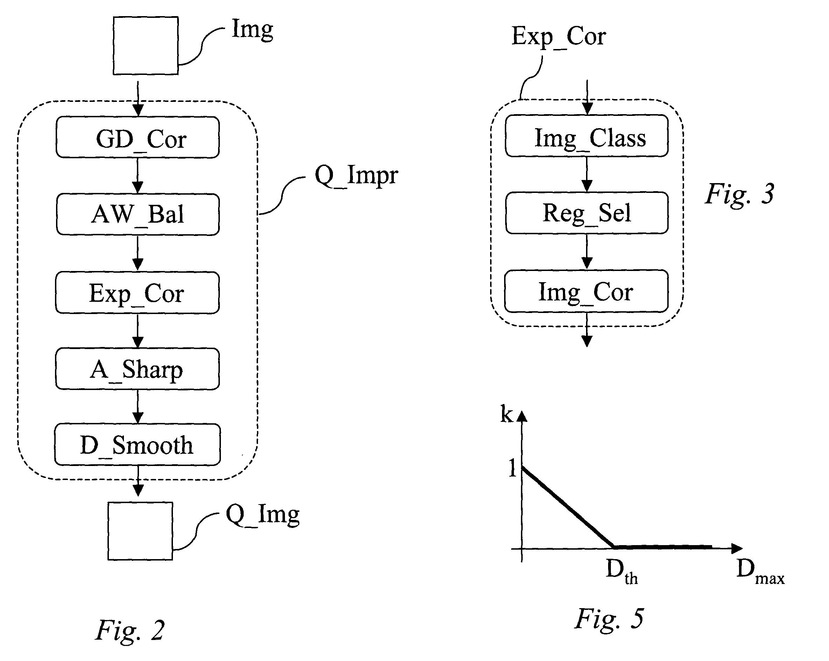

In the possible embodiment of the invention illustrated by Figure 2 the processing method Q_Impr carried out in the processing block ImgProc, starting from a digital input image Img in RGB format, produces a digital output image Q_Img in RGB format. This method substantially comprises five preferably consecutive phases, namely: a first phase GD_Cor for correcting the geometric distortion; a second phase AW_Bal for automatic white balancing; a third phase Exp_Gor for correcting the exposure; a fourth phase A_Sharp for adaptively increasing the sharpness; and a fifth phase D_Smooth of directional filtering.

The phase GD_Cor for correcting the geometric distortion makes it possible to eliminate or reduce the defects produced in the image Img by the distortion of the lens of the sensor Sens.

In fact, acquisition devices, especially when they are of the low-cost type, comprise lenses that introduce substantial distortions into the acquired image, especially distortions of the radial type. Geometric distortions will lead to a difference between the position of a point in space observed by the device and the real position of that point.

The geometric distortion may be characterized by means of a five-component distortion vector and an offset vector that takes account of the decentralized position (or "offset") of the lens and other mechanical components. Since the dominant components of the distortion are the radial components, it is preferable for the geometric distortion correction phase GD_Cor to be limited to the correction of just two components of the distortion vector. Even more preferably, the correction phase GD_Cor makes use of just a correction of the symmetrical type in accordance with a correction formula in the form of an even-power polynomial of the type:

$$\breve{x} = x(1 + k_1 r^2 + k_2 r^4)$$

$$\breve{y} = y(1 + k_1 r^2 + k_2 r^4)$$

in which $k_1$ and $k_2$ are the first two components of the distortion vector and r is the radius of the pixel (x,y) from the centre of the image. This correction method assigns to a pixel having the coordinates (x,y) the pair of corrected coordinates ($\breve{x}$, $\breve{y}$). The estimate of the parameters $k_1$ and $k_2$ is made once and for all in the calibration phase of the acquisition device, for example, in accordance with the method described in "Flexible Camera Calibration By Viewing a Plane From Unknown Orientations" (Z. Zhang, International Conference on Computer Vision, ICCV'99, Corfù, Greece, pp. 666-673, September 1999).

Following the geometric distortion correction phase, the digital image is subjected to a processing phase AW_Bal intended to assure an automatic white balancing.

This phase aims at eliminating or reducing any colour-cast problems in the digital image due to the fact that the acquisition of the image is likely to be effected in the presence of non-white lighting.

Preferably, the white balancing phase AW_Bal comprises the following operations:

- an operation of estimating or calculating the energies of the three channels R,G,B;
- an operation of correcting the digital image in order to modify the components R,G,B of the pixels in such a manner as to obtain a digital image in which the energies of the three channels R,G.B are substantially equal.

Preferably, the operation of estimating the energies will operate in such a manner as not to take into consideration any pixels that are close to saturation, because these pixels are not such as to provide information useful for estimating the energies.

In the estimating operation, for example, the energy of the green channel $ce_g$ is calculated on the basis of the following formula:

$$ce_g = \frac{\sum_{x,y} p_g(x,y) \cdot \min\left[p_g(x,y), p_r(x,y), p_b(x,y)\right] \cdot \alpha\left[T, p_g(x,y), p_r(x,y), p_b(x,y)\right]}{\sum_{x,y} \min\left[p_g(x,y), p_r(x,y), p_b(x,y)\right] \cdot \alpha\left[T, p_g(x,y), p_r(x,y), p_b(x,y)\right]}$$

in which $p_g(x,y)$, $p_r(X,y)$, $p_b(x,y)$ are, respectively, the values of the green, red and blue component of the pixel having the coordinates (x,y) and $\alpha$ is a quaternary operator that assumes the value zero when all three values $p_g(x,y)$, $P_r(x,y)$, $p_b(x,y)$ exceed a predetermined threshold value T, and otherwise assumes the value 1.

In fact, the quaternary operator $\alpha$ makes it possible to discard the pixels close to saturation, while the multiplication factor min[] permits one to obtain a weighted average on the basis of the minimum values in order to avoid obtaining an image that is excessively saturated, while yet taking due account of the correlation of the three chromatic channels.

The energies of the other channels can be calculated in the same manner.

Once the three energies have been calculated, the correction operation proceeds to calculate three gain factors, each associated with a respective channel, normalizing the three calculated energies with respect to the greatest of them (i.e. in such a manner as to make them equal thereto). The image is then corrected, i.e. modified, by multiplying each component or channel of each pixel by the calculated gain factor associated with the channel.

Returning to the example of Figure 2, the digital image produced as output of the white balancing phase AW_Bal is then subjected to an exposure correction phase Exp_Cor.

Acquisition devices of recent generations are typically equipped with an automatic exposure control. This control makes it possible to regulate the quantity of light that strikes the sensor during the acquisition. A correct exposure makes it possible to acquire images having a good and uniform tonality, to reproduce the contrast of the scene in an optimal manner and to render the lighting variations within the scene in the best possible manner.

Notwithstanding the variety of the methods for controlling the exposure and notwithstanding the complexity of some of these methods, it happens, and not by any means rarely, that images are acquired with an improper exposure. It is therefore preferable to process the acquired image in such a manner as to remedy or reduce the effects of this problem.

In any case, there does not exist an exact definition of what is the best exposure, because this depends to an appreciable extent on the contents of the image and the taste of the observer.

The exposure correction phase Exp_Cor sets out to render the most important regions of the image (judged to be such in accordance with contentual or perceptive criteria) with an average grey level (or, analogously, an average luminosity level) that substantially constitutes the centre of the possible grey levels that can be obtained with the precision employed for the representation of the digital image under processing.

As shown in Figure 3, the most important regions of the image are identified by including an image classification operation Img_Class in the exposure correction phase. This operation makes it possible to ascertain whether or not a subject, a person for example, is present in the image. Preferably, the classification operation will recognize the presence of a subject by employing an algorithm of the type known to persons skilled in the art by the name of "skin recognition". Some algorithms of this type are described, for example, in "Comparison of five color models in skin pixel classification" (B.D. Zarit, B.J. Super, and F.K.H. Quek Proc. of Int. Workshop on Recognition, Analysis, and Tracking of Faces and Gestures in Real-Time Systems, IEEE Computer Society, Corfù, Greece, pp. 58-63, 1999) and in "Skin-colour modeling and adaptation" (J.Yang, W. Lu, and A. Waibel, Technical Report CMU-CS-97-146, School of Computer Science, Carnegie Mellon University, 1997).

If the image classification operation Img_Class classifies an image as containing a subject, a subsequent selection operation Reg_Sel makes it possible to select as important the regions that contain the subject, a person for example.

If, on the other hand, the image is classified as not containing a subject, the selection operation Reg_Sel will make it possible to select as important any regions of the image that have a high energy content (for example, regions that have a great deal of focus and/or contrast). For example, the selection of important regions on the basis of the energy content can be carried out in accordance with the method described in European Patent Application EP 01830803.1.

Once the most important regions have been identified, a correction operation Img_Cor processes the digital image in such a manner as to produce as output a corrected digital image in which the regions identified as most important will have an average brightness level substantially at the centre of the scale of possible brightness values. The correction operation operates on the three channels and on all the pixels of the image and substantially comprises an operation for transforming the pixels based on the inversion of the response function of the acquisition device.

For example, the correction operation may be carried out by adapting the exposure correction method for CFA format images described in European Patent Application EP 01830803.1 to the case of an image in RGB format, which can be done in a manner obvious to a person skilled in the art.

Referring once again to the scheme of Figure 2, the exposure correction phase is followed by a phase A_Sharp for adaptively enhancing the sharpness of the image.

Low-cost acquisition devices, particularly on account of the lenses incorporated in them, tend to produce images that that become less and less focused as one moves from the centre towards the edges.

With a view to remedying or attenuating this negative effect, the phase A_Sharp of adaptively increasing the image sharpness also performs an operation in which image filtering of the "inverse" type is linearly combined with a type of image filtering known by the term of "unsharp masking".

Advantageously, the combination of these two filtering methods makes it possible not only to reduce any artefacts due to the noise typically introduced by inverse filtering, but also to attenuate any excessive exaltation of the high frequencies introduced by "unsharp masking" filtering into the areas of the image that have a high level of "texture".

We shall now explain a possible way of synthesizing a filter of the "inverse" type.

Filtering of the inverse type is intended to improve an image that is out of focus and is based on a distortion model of the type:

$$\mathrm{Img}_{nf}(x,y) = \mathrm{Img}_f(x,y) * h(x,y) + n(x,y)$$

in which $\mathrm{Img}_{nf}(x,y)$ is the degraded or out-of-focus image, $\mathrm{Img}_f(x,y)$ is the properly focused image, $h(x,y)$ is the out-of-focus function or Point Spread Function (PSF), $n(x,y)$ is the added noise and * is the two-dimensional linear convolution operator. A model for the point spread function h(x,y) will make it possible to simulate the acquisition process and to synthesize the inverse filtering.

A lens of the spherical type has a PSF of the type:

$$PSF(r) = \begin{cases} \dfrac{4}{s^2\pi}\sqrt{s^2 - 4r^2} & r \leq \dfrac{s}{2} \\ 0 & \textit{otherwise.} \end{cases}$$

in which r represents the distance from the centre of the PSF and s represents an estimate of the diameter of the COC (Circle of Confusion). The estimate of the diameter s for a given acquisition device may be obtained by means of various methods that all form part of prior art and are therefore outside the object of the present description.

An "Optical Transfer Function" (OTF) can be obtained from the Fourier transform of the PSF. Inverting this function and performing an inverse transform, one then obtains the "inverse" spatial filter.

In a preferred embodiment the image to be filtered is subdivided into a plurality of preferably concentric regions, each of which has associated with it an appropriate value of the diameter s of the COC. In this way each region of the image can be filtered with the inverse filter best suited for that particular region. For further details about the synthesis of an inverse filter reference is made to the description given in:

- "Restoration of Out of Focus Images Based on Circle of Confusion Estimate" (P. Vivirito, S. Battiato, S. Curti, M. La Cascia, R. Pirrone, Proceedings of SPIE 47th Annual Meeting 2002 - Applications of Digital Image Processing - Vol. 4790, Seattle, Washington, USA, July 2002) .

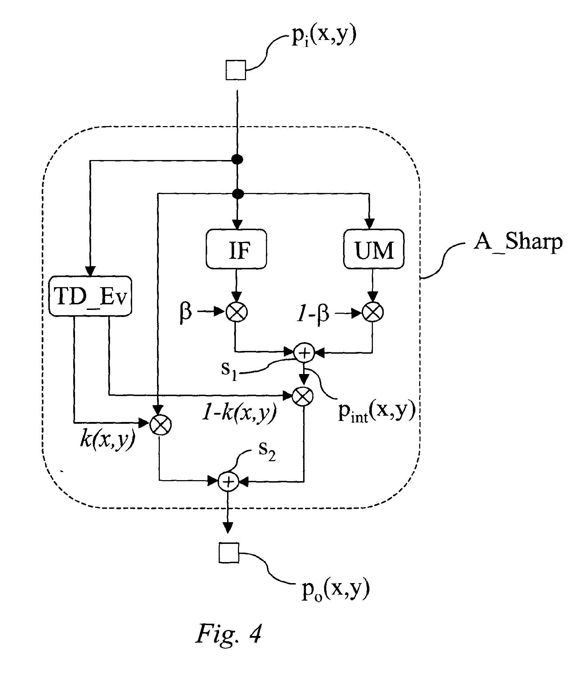

The sequence of operations carried out in the phase A_Sharp of adaptively increasing the image sharpness in order to obtain an output pixel $p_o(x,y)$ from an input pixel $p_i(x,y)$ is shown in greater detail in Figure 4.

As can be seen from this figure, the input pixel $p_i(x,y)$ is subjected to two filtering operations, respectively, an inverse filtering IF and a filtering UM of the type known as "unsharp masking".

The unsharp masking filtering is such as to produce a filtered image in which the high frequencies are emphasized as compared with the image to be filtered.

The pixels resulting from these filtering operations are linearly combined with at the summation node $s_1$, producing an intermediate pixel $p_{temp}(x,y)$. Expressed as a formula, we have:

$$p_{temp}(x,y) = \beta \times IF[p_i(x,y)] + (1-\beta) \times UM[p_i(x,y)]$$

where β is a multiplication factor comprised between 0 and 1, $IF[p_i(x,y)]$ is the pixel obtained by the inverse filtering operation $UM[p_i(x,y)]$ is the pixel obtained by the unsharp masking filtering.

Preferably the factor β is a number comprised in the range [0,3-0,7], and, even more preferably, comprised in the range [0,4-0,6]. Preferably, the factor β is a constant number for all the pixels of the image to be filtered.

As can be seen from Figure 4, an operation of estimating the homogeneity TD_Ev is such as to associate with the pixel to be filtered a homogeneity index (or "texture degree") k(x,y) on the basis of a local homogeneity measure (or, analogously, inhomogeneity measure) calculated for pixels forming part of a neighbourhood (for example, centred around the pixel and of dimension 3x3) of the pixel to be filtered.

Persons skilled in the art are familiar with different metrics for calculating a measure of homogeneity of a set of pixels and for this reason the matter will not be further considered here. Among these methods and purely by way of example, we shall cite the following: maximum difference, minimum difference, MAD (Mean of the Absolute Difference), standard deviation, extraction of a distribution parameter from a histogramme of the digital values of the pixel.

In an embodiment that is particularly advantageous from the computational point of view, the homogeneity index is obtained on the basis of the calculation of differences between the pixel to be filtered and other pixels forming part of its neighbourhood.

For example, the homogeneity index k(x,y) can be obtained by carrying out the following steps:

- calculating all the absolute differences between the pixel to be filtered and the pixels forming part of a neighbourhood of size 3x3 centred around the pixel to be filtered, one first obtains eight absolute differences;
- selecting the greatest of these differences $D_{max}$;
- if this difference is greater than a predetermined value, associating with the pixel to be filtered a homogeneity index k(x,y)=0;

- if this difference is equal to zero, associating with the pixel to be filtered a homogeneity index k(x,y)=1;
- if this difference is comprised between zero and the predetermined value, associating with the pixel to be filtered an index obtained by means of linear interpolation between the values zero and 1.

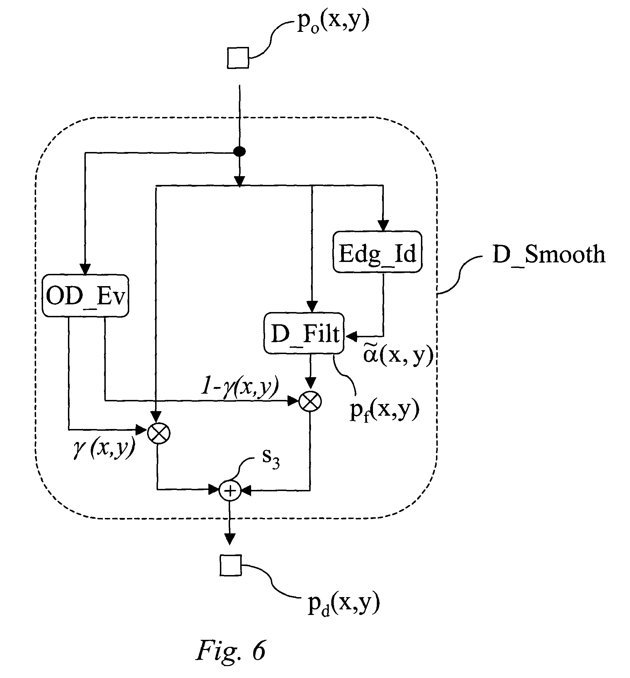

The graph of Figure 5 shows a possible relationship between $D_{max}$ and k(x,y). For example, if 8 bits are reserved for the digital representation of each component of a pixel, it has been found experimentally that satisfactory results are obtained with a predetermined value $D_{th}$ = 10.

Referring once again to the graph of Figure 4, the output pixel $p_0(x,y)$ of the phase A_Sharp for adaptively increasing the image sharpness is obtained from a linear combination operation performed at the summation node $s_2$ between the input pixel $p_i(x,y)$ and the provisional pixel $p_{temp}(x,y)$. The linear combination is preferably performed on the basis of the homogeneity index k(x,y) associated with the input pixel $p_i(x,y)$ and in accordance with the formula:

$$P_{out}(x, y) = k(x, y) \times p_i(x, y) + (1 - k(x, y)) \times p_{temp}(x, y).$$

Advantageously, this linear combination performs an operation of adaptively increasing the image sharpness, i.e. it is capable of acting on the image in different ways according to the homogeneity of the pixel or the region to be filtered. In other words, the phase A_Sharp of increasing the image sharpness produces an appreciable diminution of the out-of-focus effect in the inhomogeneous zones, i.e. the zones rich in detail, but acts in a less appreciable manner in the homogeneous regions. Indeed, an appreciable increase of sharpness in the homogeneous regions would lead to the appearance of unsightly artefacts or the introduction of noise.

Referring now to the scheme of Figure 2, the output digital image of the phase A_Sharp for adaptively increasing the image sharpness is subsequently subjected to a directional filtering phase D_Smooth, which is shown in greater detail in Figure 6.

Preferably, this type of filtering will be of the low-pass type and follows the orientation of the sides or edges present in the image.

Due to the poor sampling of the real scene, a digital image acquired with a low-resolution sensor can have visible defects of the edges contained in it. These defects are seen because they confer a zigzag appearance upon the edges.

It has been noted that, even though the phase A_Sharp of increasing the image sharpness has the advantage of reducing or eliminating the negative out-of-focus effect introduced by the lens, in some cases it may considerably amplify these edge defects.

Furthermore, it has been observed that a directional-type filtering D_Smooth applied after the sharpness increase phase A_Sharp will advantageously make it possible to oppose any negative effects produced by this phase on the edges present in the image.

Directional filtering has the advantage of performing a directional smoothing of the edges without introducing any excessive out-of-focus effects in the other image regions.

The directional filtering phase D_Smooth is preferably such as to process a pixel $p_0(x,y)$ of the image to be filtered by performing the following operations:

- an operation Edg_Id for identifying the orientation (or direction) of the edge $p_0(x,y)$ of the pixel to be filtered,
- an operation D_Filt for filtering the pixel $p_0(x,y)$ along the direction of this edge.

The operation Edg_Id of identifying the direction of the edge of the pixel $p_0(x,y)$ to be filtered is preferably carried out by calculating the direction $\alpha(x,y)$ of the edge in accordance with the following formula:

$$\alpha(x, y) = \arctan\left(\frac{S_y(x, y)}{S_x(x, y)}\right)$$

where Sy(x,y) is the value of the pixel $p_o(x,y)$ filtered with a vertical Sobel filter and $S_x(x,y)$ is the value of the pixel $p_0(x,y)$ filtered with a horizontal Sobel filter.

The operation of identifying the direction $\alpha(x,y)$ of the edge then associates with the pixel $p_o(x,y)$ to be filtered the dominant direction $\tilde{\alpha}(x,y)$, i.e. the direction having the largest amplitude in a pixel neighbourhood of size 3x3.

Once the direction $\tilde{\alpha}(x,y)$ has been identified, there is performed an operation D_Filt that preferably utilizes a Gaussian filter having an elliptical profile in order to obtain, starting from the pixel to be filtered $p_o(x,y)$, a corresponding filtered pixel $p_f(x,y)$.

A possible spatial filter $f(x,y,\widetilde{\alpha})$ of this type is, for example, of the form:

$$f(x, y, \widetilde{\alpha}) = h \times e^{-\frac{\widetilde{x}^2}{2\sigma_x^2} - \frac{\widetilde{y}^2}{2\sigma_y^2}}$$

wherein:

$$\widetilde{x} = x\cos(\alpha) - y\sin(\alpha),$$

$$\widetilde{y} = x\sin(\alpha) + y\sin(\alpha),$$

and wherein $\sigma_x$ and $\sigma_y$ represent, respectively, the variances along the two directions x and y and h is a normalization constant.

With a view to avoiding the filtering of small details, the strength of the directional filtering D_Smooth will preferably be regulated on the basis of the orientation disorder (which, for example, will be high in areas texturized areas), obtaining a definitive filtered pixel $p_d(x,y)$ from a linear combination of the filtered pixel $p_f(x,y)$ and the pixel $p_0(x,y)$ to be filtered. For example, in accordance with what is shown in Figure 6, the definitive filtered pixel $p_d(x,y)$ is obtained as:

$$p_d(x,y)=\gamma(x,y)\times p_o(x,y)+(1-\gamma(x,y))\times p_f(x,y)$$

where $\gamma(x,y)$ is a number comprised between 0 and 1 and constitutes an index of the orientation disorder that becomes greater as the orientation disorder increases. In Figure 6 the index $\gamma(x,y)$ of the orientation disorder is calculated in the estimation phase OD_Ev.

As is made obvious by the above formula, in zones with a high orientation disorder (for example, in texturized areas) the contribution of the original pixel $p_0(x,y)$ prevails in the definitive filtered pixel $p_d(x,y)$, whereas the opposite is true along the edges.

The orientation disorder index $\gamma(x,y)$ can be obtained by calculating, always in the same neighbourhood as the one used for the choice of the filtering direction, the orientation of the gradients: many aligned gradients indicate a side, many misaligned gradients indicate texturization. The alignment may be calculated by using the absolute value differences of the orientations with respect to the central pixel and then appropriately normalizing this value.

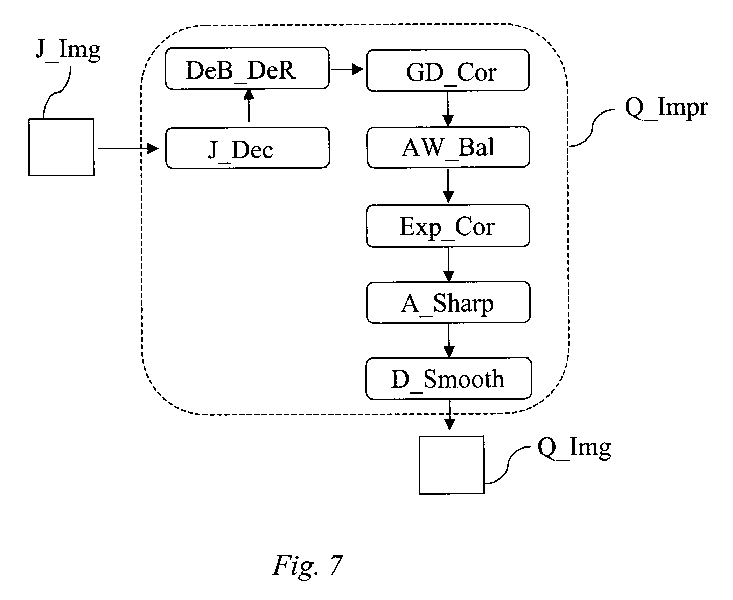

Figure 7 illustrates a second embodiment of a processing method Q_Impr in accordance with the present invention. In particular, over and above the method illustrated by Figure 2, the method Q_Impr schematically represented in Figure 7 includes also a decoding-decompression phase J_Dec and a de-blocking and de-ringing phase DeB-DeR and can be employed for improving the quality of a compressed-encoded image J_Img, for example, in accordance with an encoding-compression of the JPEG (Joint Picture Expert Group) type.

The decoding-decompression phase J_Dec makes it possible to construct a decoded-decompressed image, for example in YCrCb format, from a corresponding compressed-encoded image. The operations comprised in this phase form part of prior art and will not therefore be further described.

The de-blocking and de-ringing phase, on the other hand, makes it possible to process a decoded-decompressed image - in YCrCb format, for example - in such a way as to eliminate or reduce possible disturbances known by the names of blocking and ringing. These disturbances are introduced into the image by the compression-encoding/decoding-decompression process.

In particular, the blocking disturbance is caused by an independent quantization of adjacent blocks during the compression-encoding process. This disturbance manifests itself by the appearance of pseudo edges that can be seen in the border regions between blocks.

Ringing, on the other hand, is due to an irreversible information loss introduced by the quantization and is particularly bound up with damage to medium frequency coefficients. This disturbance manifests itself by the appearance of visible distortions in the edges of the image.

Preferably, the de-blocking and de-ringing phase DeB_DeR comprises a filtering operation of the de-blocking type and a filtering of the de-ringing type. Preferably, both the filtering operations are performed on JPEG images in a manner similar to what happens in MPEG4 decoding-decompression, albeit with appropriate adjustments that are obvious to a person skilled in the art.

In particular, as regards a detailed description of the operations of de-blocking and de-ringing filtering in post-processing in accordance with MPEG4 decoding-decompression, reference should be made to Annex F of the specification "ISO/IEC JTC1/SC29/WG11 N 2502: Final Draft of International Standard MPEG-4".

In particular, for the purposes of the de-blocking filtering it should be borne in mind that, even though in MPEG_4 this operation is performed on units known as macro-blocks, in the case of a JPEG image it is preferable for this filtering to be performed on the basis of pixel blocks of size 8x8.

Furthermore, it has to be borne in mind that, in accordance with the MPEG_4 specification, the de-blocking filtering classifies the blocks or, rather, the macro-blocks into homogeneous and non-homogeneous, utilizing for this purpose a discrimination threshold referred to the quantization parameter QP. The blocks classified as homogeneous are filtered along the along the sides with a low-pass filter.

Preferably, the same type of discrimination is effected in the de-blocking operation in the de-blocking and de-ringing phase, but referring the discrimination threshold to the quantization step adopted for the DC coefficients.

As may be noted, the other phases of the processing method shown schematically in Figure 7 are the same as those of the method already described hereinabove with reference to Figure 2.

It should be noted that in this case the particular combined use of an adaptive sharpness increase phase A_Sharp and a directional filtering phase D_Smooth makes it advantageously possible to solve the out-of-focus problem of the decoded-decompressed image (due to, for example, the use of a poor-quality optical sensor in the acquisition phase) without at the same time accentuating the artefacts due to compression-encoding and, in particular, due to information loss on some frequencies during the quantization phase.

In fact, even though the adaptive sharpness increase phase A_Sharp may possibly accentuate these artefacts, the subsequent directional filtering phase D_Smooth acts in the opposite direction and makes it possible to obtain a final image that is in any case pleasing to the eye.

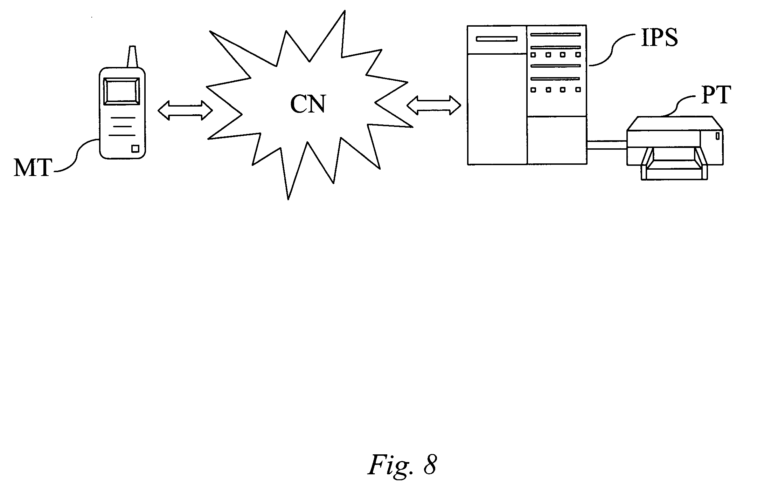

Figure 8 schematically illustrates another possible application of the processing method in accordance with the present invention and, more particularly, in accordance with the embodiment described with reference to Figure **7.**

A portable multimedia communication terminal MT is such as to acquire a digital image, assure its compression-encoding, of the JPEG type for example, and transmit the compressed-encoded image by means of a communication network CN to an image processing server IPS.

The terminal MT may be, for example, a terminal of the commercial type, provided with a low-resolution CFA sensor, a low-cost optical part (with a fixed focus, for example), and is also such as to perform processing operations of a simple type to obtain a compressed-encoded digital image.

In a particularly preferred embodiment the terminal MT transmits the compressed-encoded image by means of a message of MMS type (Multimedia Messaging Service).

The communication network CN is any kind of communication network on which a compressed-encoded image can be transmitted, a network of the wireless type for example, i.e. a radio-frequency network, or an optical fibre network.

The server IPS is connected, for example, to a printer PT capable of producing prints of photographic quality.

Advantageously, the server IPS receives the compressed-encoded image and processes it in accordance with the method Q_Impr described with reference to Figure 7, obtaining a digital image of better quality as compared with the one received from the terminal MT.

The image processed in this way can be printed and, for example, delivered to the owner of the communication terminal. This makes it possible, for example, to obtain a print of a satisfactory quality of a digital image acquired with a low-cost device that, from the image processing point of view, comprises procedures that are simple and essential procedures and, for this reason, of little weight at the computational level.

In a variant of this embodiment the server IPS sends the processed digital image to an addressee by means of an electronic mail message.

In another embodiment the processing method in accordance with the present invention is implemented as a software installed in a personal computer and is such as to improve the quality of a digital image acquired by means of a webcam (or by means of a digital still camera) that can be connected to the computer.

Obviously, whenever contingent and specific needs have to be satisfied, a person skilled in the art will be able to introduce further modifications and variants to the processing method according to the present invention, all of which are in any case contained within the protection scope of the invention as defined by the claims attached hereto.

**Claims**

**1.** A method (Q_Impr) for processing a first digital image, comprising an operation (A_Sharp) for increasing the sharpness of said first digital image,
   **characterized in that** said operation for increasing the sharpness (A_Sharp) is of the adaptive type and includes the following operations:

- associating (TD_Ev) with pixel ($p_i(x,y)$) of the starting image respective local homogeneity measures ($k(x,y)$), and
- providing pixel ($p_0(x,y)$) of a second digital image by modifying respective pixels ($p_i(x,y)$) of the first image on the basis of said respective local homogeneity measures ($k(x,y)$).

2. A method in accordance with Claim 1, wherein with at least one pixel ($p_i(x,y)$) of the first digital image there is associated a respective local homogeneity measure ($k(x,y)$) valued on the basis of pixels forming part of a neighbourhood of said at least one pixel.

3. A method in accordance with Claim 2, wherein said local homogeneity measure ($k(x,y)$) is obtained on the basis of a calculation of differences between at least one pixel ($p_i(x,y)$) and pixels forming part of said neighbourhood.

4. A method in accordance with Claim 1, wherein said phase of providing a pixel ($p_0(x, y)$) of the second image modifies a respective pixel ($p_i(x,y)$) of the first image by performing the operations of:

- filtering said pixel ($p_i(x,y)$), obtaining a first filtered pixel ($p_{int}(x,y)$),
- calculating ($s_2$) the pixel ($p_0(x,y)$) of the second image as a combination of the first filtered pixel ($p_{int}(x,y)$) and said pixel ($p_i(x,y)$) of the first image, the contribution of said pixel ($p_i(x,y)$) of the first image in said combination becoming greater as the homogeneity measure ($k(x,y)$) associated with it increases.

5. A method in accordance with Claim 4, wherein said filtering operation comprises the operations of:

- filtering said pixel ($p_i(x,y)$) of the starting image by means of an inverse filtering (IF), obtaining a first provisional pixel;
- filtering said pixel ($p_i(x,y)$) of the starting image by means of a filtering (UM) of the "unsharp masking" type, obtaining a second provisional pixel;
- calculating ($s_1$) said first filtered pixel ($p_{int}(x,y)$) as a linear combination of said first provisional pixel and said second provisional pixel.

6. A method in accordance with Claim 1, including also a directional filtering phase (D_Smooth) of said second digital image.

7. A method in accordance with Claim 6, wherein said directional filtering phase is a smoothing filtering that follows the direction of the edges comprised in said second digital image.

8. A method in accordance with Claim 7, wherein said smoothing filtering is a filtering of the low-pass type.

9. A method in accordance with Claim 6, wherein said directional filtering phase comprises the operations of:

- associating with pixel ($p_0(x,y)$) of the second image respective directions ($\tilde{\alpha}(x,y)$) of the edges,
- filtering said pixels of the second image along respective directions associated therewith.

10. A method in accordance with Claim 9, wherein said operation of filtering pixels of the second image utilizes a Gaussian filter with an elliptical profile.

11. A method (Q_Impr) in accordance with Claim 1, wherein said first digital image is obtained from an initial digital image (Img) by means of a processing operation comprising an exposure correction phase (Exp_Cor).

12. A method in accordance with Claim 11, wherein said exposure correction phase (Exp_Cor) processes an image to be corrected by performing the operations of:

- selecting (Reg_Sel) more relevant regions of the image to be corrected;
- processing (Img_Cor) the image to be corrected in such a way that said relevant regions have an average grey or luminosity level substantially at the centre of the range of possible grey levels.

13. A method in accordance with Claim 12, wherein said selection phase (Reg_Sel) comprises an operation of ascertaining (Img_Class) whether in the image to be corrected there is present a subject, said ascertainment operation (Img_Class) being based on a "skin recognition" algorithm.

**14.** A method (Q_Impr) in accordance with Claim 1, wherein said first digital image is obtained from an initial digital image (Img) by means of a processing operation comprising an automatic white balancing phase (AW_Bal).

**15.** A method in accordance with Claim 14, wherein said balancing phase (AW_Bal) is such as to process images in RGB format and comprises the operations of:

- estimating or calculating three respective energies for the channels R,G,B of the image in RGB format,
- correcting the image in RGB format in such a way as to obtain a corrected digital image having the energies of the three channel R, G, B substantially equal,

  the operation of estimating the energies being such as not to take into consideration pixels of the RGB image that are close to saturation.

**16.** A method (Q_Impr) in accordance with Claim 1, wherein said first digital image is obtained from an initial digital image (Img) by means of a processing operation comprising a geometric distortion correction phase (GD_Corr).

**17.** A method in accordance with Claim 1, wherein said first image is obtained from an initial digital image (J_Img) compressed-encoded by means of a processing operation comprising a decoding-decompression phase (J_Dec) of said initial image.

**18.** A method in accordance with Claim 17, wherein said processing operation comprises also a de-blocking filtering operation (DeB_DeR) and a de-ringing filtering operation (DeB_DeR).

**19.** A method in accordance with Claim 17, wherein said initial digital image is a compressed-encoded JPEG image.

**20.** A portable communication device, including a digital image acquisition and processing module 1, comprising a processing block (ImgProc) for enhancing an acquired image, said block (ImgProc) employing a processing method (Q_Impr) in accordance with any one of Claims 1 to 16.

**21.** An image processing server (IPS) for receiving a compressed-encoded digital image from a portable communication device (MT) and processing this image in accordance with any one of Claims 17 to 19.

**22.** An image processing server in accordance with Claim 21, wherein said compressed-encoded digital image is received by means of an MMS (Multimedia Messaging Service) message transmitted by said portable device (MT) .

*Fig. 1*

EP 1 486 916 A1

Fig. 2

Fig. 3

Fig. 5

EP 1 486 916 A1

Fig. 4

$p_o(x,y)$

OD_Ev

Edg_Id

D_Smooth

D_Filt

$\widetilde{\alpha}(x, y)$

$1-\gamma(x,y)$

$p_f(x,y)$

$\gamma(x,y)$

$s_3$

$p_d(x,y)$

*Fig. 6*

Fig. 7

*Fig. 8*

# EP 1 486 916 A1

**European Patent Office**

## EUROPEAN SEARCH REPORT

**Application Number**

EP 03 42 5388

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2002/110282 A1 (KRAFT WALTER ET AL) 15 August 2002 (2002-08-15) * paragraphs [0003]-[0024],[0046]-[0049],[0081],[0082] * | 1-4,11, 20 | G06T5/00 G06T5/20 G06T9/00 |
| Y | * paragraphs [0033],[0034],[0054]-[0058] * | 6-19,21, 22 | |
| X | POLESEL A ET AL: "Adaptive unsharp masking for contrast enhancement" IMAGE PROCESSING, 1997. PROCEEDINGS., INTERNATIONAL CONFERENCE ON SANTA BARBARA, CA, USA 26-29 OCT. 1997, LOS ALAMITOS, CA, USA,IEEE COMPUT. SOC, US, 26 October 1997 (1997-10-26), pages 267-270, XP010254160 ISBN: 0-8186-8183-7 * the whole document * | 1-4,20 | |
| Y | CHUNG J KUO ET AL: "ADAPTIVE POSTPROCESSOR FOR BLOCK ENCODED IMAGES" IEEE TRANSACTIONS ON CIRCUITS AND SYSTEMS FOR VIDEO TECHNOLOGY, IEEE INC. NEW YORK, US, vol. 5, no. 4, 1 August 1995 (1995-08-01), pages 298-304, XP000528331 ISSN: 1051-8215 * page 299, left-hand column, line 13 - page 301, right-hand column, line 23 * | 6-8, 17-19, 21,22 | TECHNICAL FIELDS SEARCHED (Int.Cl.7) G06T |

-/--

The present search report has been drawn up for all claims

| Place of search | Date of completion of the search | Examiner |
|---|---|---|
| MUNICH | 13 November 2003 | Zamuner, U |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

18

# EP 1 486 916 A1

European Patent
Office

**EUROPEAN SEARCH REPORT**

Application Number

EP 03 42 5388

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | LAW T ET AL: "IMAGE FILTERING, EDGE DETECTION, AND EDGE TRACING USING FUZZY REASONING" IEEE TRANSACTIONS ON PATTERN ANALYSIS AND MACHINE INTELLIGENCE, IEEE INC. NEW YORK, US, vol. 18, no. 5, 1 May 1996 (1996-05-01), pages 481-491, XP000592440 ISSN: 0162-8828 * page 482, left-hand column, line 5 - page 483, right-hand column, line 43 * --- | 6-10 | |
| Y | MANCUSO M, BATTIATO S: "An introduction to the Digital Still Camera Technology" ST JOURNAL OF SYSTEM RESEARCH, [Online] vol. 2, no. 2, 2 December 2002 (2002-12-02), pages 1-9, XP002261172 Retrieved from the Internet: <URL:http://www.dmi.unict.it/~battiato/download/DSC1.pdf> [retrieved on 2003-11-12] * page 4, left-hand column, line 18 - page 6, right-hand column, line 8 * --- | 11-15 | |
| Y | US 6 157 396 A (FOGG CHAD ET AL) 5 December 2000 (2000-12-05) * column 17, line 66 - column 19, line 17 * --- | 16 | |
| Y | EP 0 797 349 A (SAMSUNG ELECTRONICS CO LTD) 24 September 1997 (1997-09-24) * page 5, line 21 - line 40 * --- | 17-19, 21,22 | |
| A | US 5 878 174 A (STEWART PAUL JOSEPH ET AL) 2 March 1999 (1999-03-02) * abstract * ----- | 16 | |

TECHNICAL FIELDS
SEARCHED (Int.Cl.7)

The present search report has been drawn up for all claims

| Place of search | Date of completion of the search | Examiner |
|---|---|---|
| MUNICH | 13 November 2003 | Zamuner, U |

EPO FORM 1503 03.82 (P04C01)

## ANNEX TO THE EUROPEAN SEARCH REPORT
## ON EUROPEAN PATENT APPLICATION NO.

EP 03 42 5388

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2003

| Patent document cited in search report | | Publication date | Patent family member(s) | | Publication date |
|---|---|---|---|---|---|
| US 2002110282 | A1 | 15-08-2002 | EP 1231773 A1<br>CA 2367549 A1<br>JP 2002314817 A | | 14-08-2002<br>09-08-2002<br>25-10-2002 |
| US 6157396 | A | 05-12-2000 | WO 0010129 A1 | | 24-02-2000 |
| EP 0797349 | A | 24-09-1997 | KR 242636 B1<br>CN 1170304 A ,B<br>DE 69627982 D1<br>EP 0797349 A2<br>US 5883983 A | | 01-02-2000<br>14-01-1998<br>12-06-2003<br>24-09-1997<br>16-03-1999 |
| US 5878174 | A | 02-03-1999 | NONE | | |

EPO FORM P0459